(19) Europäisches Patentamt / European Patent Office / Office européen des brevets

(11) **EP 2 266 158 B1**

(12) **FASCICULE DE BREVET EUROPEEN**

(45) Date de publication et mention
de la délivrance du brevet:
**16.11.2011 Bulletin 2011/46**

(21) Numéro de dépôt: **09738308.7**

(22) Date de dépôt: **31.03.2009**

(51) Int Cl.:
***H01M 8/04*** *(2006.01)*

(86) Numéro de dépôt international:
**PCT/FR2009/000377**

(87) Numéro de publication internationale:
**WO 2009/133274 (05.11.2009 Gazette 2009/45)**

(54) **PROCEDE DE STOCKAGE D'UNE PILE A COMBUSTIBLE A TEMPERATURE NEGATIVE**

VERFAHREN ZUR LAGERUNG EINER BRENNSTOFFZELLE BEI NEGATIVER TEMPERATUR

METHOD FOR STORING A FUEL CELL AT A NEGATIVE TEMPERATURE

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **03.04.2008 FR 0801846**

(43) Date de publication de la demande:
**29.12.2010 Bulletin 2010/52**

(73) Titulaire: **Commissariat à l'Énergie Atomique
et aux Énergies Alternatives
75015 Paris (FR)**

(72) Inventeurs:
• **PINTON, Eric
F-38130 Echirolles (FR)**
• **FOURNERON, Yannick
F-01660 Vandeins (FR)**
• **GUILLERMO, Armel
F-38400 St Martin d'Hères (FR)**

(74) Mandataire: **de Jong, Jean Jacques
Cabinet Hecké
10, rue d'Arménie
Europole
BP 1537
38025 Grenoble Cedex 1 (FR)**

(56) Documents cités:
EP-A- 1 672 727      WO-A-2007/091137
US-A1- 2003 180 586     US-A1- 2006 115 699

• TAJIRI K. ET AL.: "Isothermal cold start of
polymer electrolyte fuel cells" JOURNAL OF THE
ELECTROCHEMICAL SOCIETY, vol. 154, no. 2, 15
décembre 2006 (2006-12-15), pages B147-B152,
XP002503230 cité dans la demande

EP 2 266 158 B1

EP 2 266 158 B1

## Description

## Domaine technique de l'invention

L'invention est relative à un procédé de stockage d'une pile à combustible comportant au moins une cellule élémentaire munie d'un assemblage membrane/électrodes dans lequel une membrane est située entre une anode et une cathode.

## État de la technique

Une pile à combustible est un empilement comportant au moins une cellule élémentaire dans laquelle a lieu une réaction électrochimique entre deux réactifs qui sont introduits de manière continue. Une cellule élémentaire est composée d'un assemblage membrane/électrodes dans lequel la membrane est située entre une anode et une cathode. L'assemblage est classiquement disposé entre des plaques de distribution comportant des canaux d'acheminement des réactifs. La membrane, en polymère solide, est un conducteur ionique (électrolyte), par exemple composé de résine perfluoro-sulfonée solide comme le NAFION® commercialisé par la société Dupont.

Pour obtenir des performances optimales d'une pile à combustible, la membrane de chaque cellule élémentaire doit contenir une quantité d'eau proche de la saturation. Pendant les phases d'arrêt ou de stockage d'une pile à combustible en hiver, l'eau liquide dans le coeur de la pile peut geler. Comme décrit dans l'article « Water sorption-desorption in Nafion® membranes at low temperature, probed by micro X-Ray diffraction », de Pineri et al., publié en 2007 dans le « Journal of Power Sources », Vol. 172, P. 587 à 596, lors du refroidissement de la pile à combustible à des températures négatives, l'eau dans la membrane de chaque cellule élémentaire désorbe avec le refroidissement et forme des cristaux de glace à la surface externe de la membrane et au niveau des électrodes. La structure tétraédrique présente dans l'eau liquide se fige lors du refroidissement pour former un solide cristallin. Cette nouvelle structure requiert un volume plus élevé que celui de l'eau liquide et peut engendrer des dégradations irréversibles dans les électrodes. De plus, lors d'un démarrage à des températures négatives, la glace peut limiter l'accès des gaz aux sites catalytiques de la pile et donc limiter ses performances.

Afin de limiter les problèmes de désorption, des techniques d'assèchement de la membrane ont été proposées. La technique la plus couramment utilisée consiste à purger la pile à combustible avec un gaz sec. Une autre technique, plus douce, consiste à purger la pile à combustible avec un gaz humidifié, afin d'évacuer une partie de l'eau contenue dans la membrane comme cela est décrit dans l'article « Isothermal Cold Start of Polymer Electolyte Fuel Cells » de Tajiri et al., publié en 2007 dans le « Journal of The Electrochemical Society », Vol. 154 P. B147 à B152. Cependant le niveau d'humidité à atteindre est arbitraire.

## Objet de l'invention

Le but de l'invention consiste à adapter le procédé de stockage d'une pile à combustible en fonction de la température à laquelle la pile doit être stockée, permettant ainsi un redémarrage optimal de la pile à combustible.

Ce but est atteint par le fait que, après une première phase d'étalonnage d'une membrane de référence, par résonance magnétique nucléaire, pour obtenir une courbe d'évolution de la charge en eau maximale de la membrane en fonction de la température de la membrane, et une deuxième phase d'étalonnage d'une pile étalon, pour obtenir une relation entre la résistance électrique de la pile étalon, la charge en eau de sa membrane et sa température, le procédé comporte, à chaque phase de stockage de la pile à utiliser pour une température d'assèchement donnée, les étapes successives suivantes :

- la détermination d'une température de stockage,
- la détermination à partir de ladite courbe d'évolution, d'une charge en eau de stockage correspondant à la température de stockage,
- la détermination, à partir de ladite relation, d'une valeur de résistance d'assèchement de la pile à stocker correspondant à la température d'assèchement et à la charge en eau de stockage,
- l'assèchement de la pile à combustible à la température d'assèchement jusqu'à ce que la résistance électrique aux bornes de la pile à stocker soit égale à ladite valeur de la résistance d'assèchement,
- le refroidissement de la pile jusqu'à la température de stockage,
- le stockage de la pile à combustible à la température de stockage.

Selon un développement de l'invention, la deuxième phase d'étalonnage comporte des mesures de la résistance électrique de la pile étalon pour une pluralité de valeurs de la charge en eau et de températures d'étalonnage différentes, chaque mesure de la résistance comportant les étapes successives suivantes :

- la détermination, à partir de la courbe d'évolution, de la charge en eau à atteindre,
- l'injection d'au moins un gaz neutre humidifié à l'anode et/ou la cathode,
- la mise à la température d'étalonnage de la pile étalon,
- le maintien de l'injection du gaz neutre jusqu'à une stabilisation de la résistance électrique de la pile étalon et jusqu'à l'obtention d'une tension nulle en circuit ouvert,
- le maintien de l'injection du gaz neutre à ladite résistance stabilisée pendant une période prédéterminée, l'arrêt de l'injection du gaz neutre et l'enregistrement de la résistance de la pile correspondant à ladite charge en eau et à la température étalon correspondante.

## Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :

La figure 1 illustre schématiquement une vue en coupe d'une pile à combustible selon l'art antérieur.
La figure 2 illustre schématiquement une courbe d'évolution de la charge en eau maximale de la membrane d'une pile à combustible en fonction de sa température.
La figure 3 représente des courbes illustrant la relation entre la résistance électrique d'une pile à combustible en fonction de sa charge en eau et de sa température, établie grâce à un étalonnage de la pile à combustible.
La figure 4 illustre schématiquement différentes étapes du procédé d'assèchement d'une pile à combustible pour un stockage à -20°C.

## Description d'un mode préférentiel de réalisation

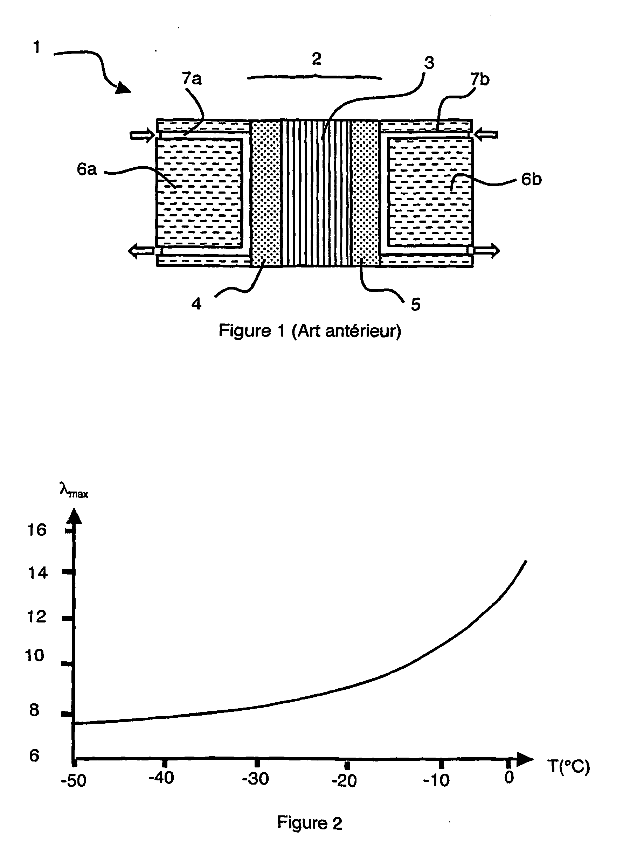

Comme illustré à la figure 1, une pile à combustible comporte au moins une cellule élémentaire 1 munie d'un assemblage membrane/électrodes 2, dans lequel une membrane 3 est située entre une anode 4 et une cathode 5. La cellule élémentaire peut également comporter des plaques distributrices 6a et 6b munies de canaux 7a et 7b reliés aux électrodes et destinées à amener un comburant et un combustible en contact avec les électrodes.

Lors du stockage d'une pile à combustible à une température négative, il est important d'assécher cette dernière afin de limiter le phénomène de désorption décrit dans l'art antérieur avant de refroidir la pile à combustible de sa température de fonctionnement Tf à sa température de stockage Ts.

Le procédé de stockage de la pile à combustible comporte tout d'abord deux phases d'étalonnage d'une part d'une membrane de référence et d'autre part d'une pile étalon. La pile étalon est une pile représentative des piles à combustible de même type, qui sont produites en masse selon un même design. La membrane de référence est représentative de la membrane utilisée dans la pile à stocker.

Dans la première phase d'étalonnage, la charge en eau $\lambda$ d'une membrane de référence en fonction de la température est déterminée par résonance magnétique nucléaire (RMN), par exemple en plaçant la membrane de référence dans une enceinte appropriée. La courbe d'évolution de la charge en eau maximale $\lambda_{max}$ dans la membrane est illustrée à la figure 2 en fonction de la température T. Cette charge en eau maximale, sensiblement constante lorsque la température est positive, diminue avec la température lorsque celle-ci devient négative. La charge en eau maximale $\lambda_{max}$ correspond à la quantité maximale d'eau sous forme liquide présente dans la membrane à une température donnée. La mesure par RMN permet de mesurer la quantité d'eau liquide via la quantité d'atomes d'hydrogène.

À titre d'exemple, pour une membrane NAFION® de poids équivalent (« EW ») de 1100g/éq, pour des températures allant jusqu'à -50°Celsius et en fonction de la charge en eau initiale à 20°C, la relation entre la charge en eau maximale $\lambda_{max}$ et la température T comprise entre 0 et -50°C correspond à l'équation :

$$\lambda_{max} = \frac{1}{\left(0{,}07 - 0{,}00274\,T - 4{,}15*10^{-5}\,T^2 - 2{,}24*10^{-7}\,T^3\right)} \qquad (1)$$

Pour éviter la désorption de l'eau contenue dans la membrane pendant le refroidissement de la pile à combustible, d'une température de fonctionnement Tf à une température de stockage Ts, la charge en eau de la membrane doit, avant refroidissement, être inférieure ou égale à la charge en eau maximale $\lambda_{max}(Ts)$ correspondant à une température de stockage Ts donnée. Cette valeur peut être déterminée à partir de la courbe d'évolution préalablement obtenue et sera atteinte par l'assèchement de la membrane réalisé à une température d'assèchement Ta, de préférence inférieure ou égale à la température de fonctionnement Tf.

La charge en eau de stockage $\lambda$s correspondant à la température de stockage peut être égale à la charge en eau maximale $\lambda_{max}$(Ts) déterminée à partir de la courbe d'évolution.

Selon un développement de l'invention, la charge en eau de stockage $\lambda$s peut tenir compte de la quantité d'eau présente, sous forme de vapeur, dans les canaux des plaques distributrices des réactifs. En effet, cette eau sous forme de vapeur est susceptible de se condenser pendant le refroidissement à la température de stockage Ts de la pile à combustible. La charge en eau de stockage à atteindre avant le stockage, est alors obtenue par la résolution de l'inéquation

$$\lambda s \leq \lambda_{max}(Ts) - \Delta\lambda(Ta,Ts,\lambda s) \qquad (2)$$

dans laquelle la différence $\Delta\lambda$, dépendant de la température d'assèchement, de la température de stockage et de la charge en eau de stockage, est donnée par

$$\Delta\lambda(Ta,Ts,\lambda s) = \frac{\Delta C_{H2O}(Ta,Ts,\lambda s)EW}{\rho_{memb}} \qquad (3)$$

Dans cette inéquation, $\rho_{memb}$ correspond à la masse volumique de la membrane sèche (kg/m$^3$) et EW correspond à la masse équivalente de la membrane en kilogramme de membrane par mole de porteurs de charge. $\Delta C_{H2O}$ (Ta, Ts, $\lambda$s) est la variation de concentration en eau dans la membrane durant le refroidissement de la température d'assèchement Ta à la température de stockage Ts. Cette variation est générée par la condensation de la vapeur encore présente dans les canaux après assèchement (moles de molécules d'eau par m$^3$ de membrane). Elle est donnée par :

$$\Delta C_{H2O}(Ta,Ts,\lambda s) = (\frac{P_v(Ta,\lambda s)}{R \times Ta} - \frac{P_{sat}(Ts)}{R \times Ts}) \times \frac{V_{canaux}}{V_{memb}} \qquad (4)$$

où $V_{canaux}$ correspond au volume des canaux des plaques distributrices des réactifs au contact de l'assemblage membrane/électrodes d'une cellule élémentaire, en m$^3$ et $V_{memb}$ correspond au volume de la membrane d'une cellule élémentaire, en m$^3$. Les températures Ta et Ts sont exprimées en Kelvin. R correspond à la constante des gaz parfaits (8,315 J/mole K). $P_{sat}$(Ts) correspond à la pression de saturation (en Pa) à la température minimale de stockage de la pile, T étant exprimé en Kelvin, donné par

$$\ln(P_{sat}(T)) = 23,1961 - \left(\frac{3816,44}{-46,13 + T}\right) \qquad (5)$$

dans le domaine de température compris entre 20°C et 90°C. $P_v$(Ta,$\lambda$s) correspond à la pression de vapeur, après assèchement, dans le volume des canaux des plaques distributrices des réactifs au contact de l'assemblage membrane/électrodes d'une cellule élémentaire. Pour une membrane en équilibre avec la vapeur environnante, sa charge en eau peut s'écrire sous la forme

$$\lambda = f(HR(T),T) \qquad (6)$$

L'équation (6) est relativement bien connue pour une membrane en NAFION®, notamment de l'article « Transport in polymer-Electrolyte Membranes » de Weber et Newman, publié en 2004 dans le « Journal of Electrochemical Society » Vol. 151 (2), pages A311-A326. La figure 2 de ce document illustre le comportement général en fonction de la température. Dans l'équation (6), HR correspond à l'humidité relative, définie par

$$HR(T) = \frac{P_v}{P_{sat}(T)} \qquad (7)$$

L'équation (6) peut, par l'introduction de l'équation 7, se mettre sous la forme

$$P_v(Ta,\lambda s) = g(P_{sat}(Ta),Ta,\lambda s) \qquad (8)$$

Dans la deuxième phase d'étalonnage, la pile étalon, de préférence comportant la membrane de référence (ou une membrane équivalente) utilisée pour les mesures par RMN, permet d'établir une loi empirique donnant la relation entre la résistance électrique de la pile étalon, sa température T et sa charge en eau $\lambda$ La résistance électrique de la pile étalon peut être la résistance mesurée aux bornes de la pile à combustible ou aux bornes d'une cellule élémentaire.

En effet, la résistance électrique d'une pile à combustible Rp ou d'une cellule élémentaire Rc est la somme des résistances en série suivants :

- la résistance Rm de la membrane, due au transport des charges ioniques
- la résistance $R_{mat}$, due au transport des charges électroniques au travers des matériaux conducteurs utilisés pour réaliser les électrodes
- les résistances de contact $R_{contact}$, dues aux contacts entre divers matériaux transporteurs de charge pouvant être présents dans la pile ou la cellule élémentaire.

La résistance Rm($\lambda$, T) de la membrane dépend de sa charge en eau $\lambda$ et de sa température T. Les résistances de contact $R_{contact}$($\lambda$, T) sont essentiellement fonction des efforts de pressage entre les couches des différents matériaux et varient avec la température des matériaux (dilatation) et la charge en eau de la membrane (gonflement de la membrane). La résistance des matériaux $R_{mat}$(T) conducteurs électroniques est, quant à elle, légèrement influencée par la température.

La résistance électrique d'une pile, ou d'une cellule élémentaire, est donc directement fonction de la charge en eau $\lambda$ et de la température T. La mesure de la résistance aux bornes de la pile ou de la cellule élémentaire et la connaissance de la relation Rp($\lambda$,T) ou Rc($\lambda$,T) permet de déterminer la charge en eau $\lambda$ pour une température et une mesure de résistance donnée.

Pour obtenir la relation Rp($\lambda$,T) ou Rc($\lambda$,T), la deuxième phase d'étalonnage de la pile étalon comporte des mesures de la résistance électrique de la pile étalon pour une pluralité de valeurs de charge en eau $\lambda$, à différentes températures d'étalonnage Te, de préférence situées entre 20°C et 90°C. Chaque mesure de la résistance comporte les étapes successives suivantes :

- la détermination, à partir de la courbe d'évolution, de la charge en eau $\lambda$ à atteindre. Cette valeur peut comporter les correctifs définis précédemment (équation 2) pour tenir compte de l'eau sous forme de vapeur encore présente dans les canaux 7a et 7b,
- l'injection d'au moins un gaz neutre humidifié à l'anode 4 et/ou la cathode 5, de préférence par l'intermédiaire des canaux 7a et 7b des plaques de distribution, pour assécher la pile étalon,
- la mise à la température d'étalonnage Te de la pile étalon,

- le maintien de l'injection du gaz neutre jusqu'à une stabilisation de la résistance électrique de la pile étalon et jusqu'à l'obtention d'une tension nulle en circuit ouvert,
- le maintien de l'injection du gaz neutre à ladite résistance stabilisée pendant une période prédéterminée, l'arrêt de l'injection du gaz neutre et l'enregistrement de la résistance de la pile correspondant à la charge en eau λ et à la température étalon Te correspondante.

Il se peut qu'à la fin de la deuxième phase d'étalonnage définie ci-dessus la résistance mesurée ne soit pas stable, mais diminue après l'arrêt de l'injection du gaz neutre. Cette diminution peut être due au fait que de l'eau liquide est restée emprisonnée dans de très petits pores des électrodes. Cette eau résiduelle réhydrate alors la membrane après l'arrêt des gaz. Dans cette situation, il faut reprendre l'assèchement de la pile étalon à partir de la deuxième étape de la deuxième phase d'étalonnage (injection d'un gaz neutre).

De préférence, le gaz neutre humidifié a une humidité relative dépendant de la valeur de la charge en eau λ à atteindre comme vu précédemment dans l'article de Tajiri. L'humidité relative peut aussi dépendre aussi de la température étalon Te (équation 6 ci-dessus).

De préférence, le gaz neutre humidifié utilisé est de l'azote.

De préférence, l'injection du gaz neutre humidifié est réalisée à une pression la plus proche possible de la pression atmosphérique. La valeur des débits d'injection du gaz a peu d'importance et joue seulement sur la durée d'assèchement. Avantageusement, une vitesse supérieure à 5m/s dans les canaux est un bon compromis.

L'injection du gaz neutre peut être maintenu pendant environ 3 heures après stabilisation de la résistance. Ce maintien de l'injection permet entre autre d'évacuer les molécules d'eau emprisonnées dans les pores des électrodes pour éviter la réhydratation de la membrane ainsi que la détérioration des électrodes lorsque le température de la pile devient négative.

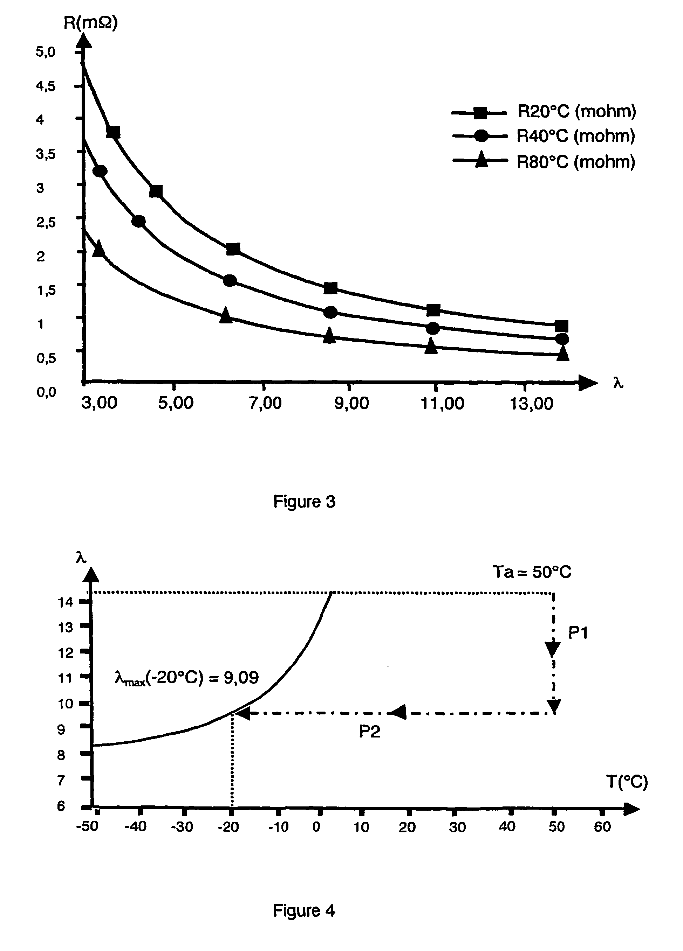

La deuxième phase d'étalonnage permet, par exemple, d'établir des courbes de l'évolution de la résistance en fonction de la température et de la charge en eau λ (figure 3). La figure 3 illustre trois courbes représentatives de l'évolution de la résistance en fonction de la charge en eau pour les températures 20°C, 40°C et 80°C.

Une fois que les deux phases d'étalonnages ont été réalisées, une résistance de stockage peut être déterminée pour toutes les piles à combustible dont le design est similaire à la pile étalon et qui sont destinées à être stockées à des températures négatives. À chaque fois qu'une pile à combustible doit être stockée, la phase de stockage de la pile à utiliser comporte, pour une température d'assèchement donnée Ta les étapes successives suivantes :

- la détermination d'une température de stockage Ts,
- la détermination à partir de la courbe d'évolution de la charge maximale en eau en fonction de la température λ(Ts) obtenue par RMN, d'une charge en eau de stockage λs correspondant à la température de stockage Ts. Cette charge en eau de stockage λs est de préférence inférieure ou égale à la charge en eau maximale $\lambda_{max}$ obtenue grâce à la courbe d'évolution, et avantageusement tient compte des corrections dépendant de la quantité d'eau sous forme de vapeur présente dans les canaux des plaques distributrices des réactifs selon l'équation (2) ci-dessus,
- la détermination, à partir de la relation entre la résistance électrique de la pile étalon d'une valeur de résistance d'assèchement Ra de la pile correspondant à la température d'assèchement Ta et de la charge en eau de stockage λs. Cette valeur de résistance d'assèchement Rs est déterminée à partir des courbes établies lors de la deuxième phase d'étalonnage (figure 3),
- l'assèchement P1 de la pile à combustible à la température Ta jusqu'à ce que la résistance électrique aux bornes de la pile soit égale à ladite valeur de la résistance d'assèchement Ra,
- le refroidissement P2 jusqu'à la température de stockage,

puis le stockage de la pile à combustible à la température de stockage Ts.

À titre d'exemple, pour une pile de 220cm$^2$ de surface active dont les assemblages membrane/électrodes contiennent une membrane NAFION® 112, avec des volumes de canaux de distribution de 53cm$^2$ par plaque distributrice, des gaz à une température d'assèchement Ta de 50°C et une température de stockage Ts de -20°C, il est obtenu un $\lambda_{max}$(-20°C) =9,09 et $\Delta\lambda$(50°C, -20°C) =0,18, soit une charge en eau de stockage correspondante λs≤8,91. Un assèchement de la membrane au-dessus de 8,91 provoque une désorption de la membrane lors du refroidissement à la température de stockage alors qu'un assèchement en dessous de 8,91 augmente les dépenses énergétiques lors de l'assèchement et le démarrage à froid de la pile à combustible est dégradé. De plus un assèchement trop sévère peut aussi engendrer des dégradations irréversibles.

Dans l'exemple particulier illustré à la figure 4, la température d'assèchement Ta de la pile à combustible est de 50°C, la température de stockage est de - 20°C et la charge en eau maximale correspondante est $\lambda_{max}$(-20°C)=9,09. La pile à combustible est alors asséchée pendant la phase d'assèchement P1 comme défini ci-dessus jusqu'à ce que la résistance électrique aux bornes de la pile soit égale à la résistance d'assèchement Ra(λs,Ta) où λs=$\lambda_{max}$. Une fois asséchée, la pile à combustible peut être refroidie pendant une phase de refroidissement P2 jusqu'à sa température de stockage Ts, c'est-à-dire jusqu'à température prédéfinie de -20°C.

Le procédé de stockage et ses variantes décrites ci-dessus peuvent-être, à titre d'exemple, mis en oeuvre dans l'industrie automobile. De manière générale, le procédé concerne toutes les piles à combustible à membrane polymère solide ou à membrane échangeuse de protons susceptible d'évoluer dans un environnement les conduisant en phase d'arrêt à des températures inférieures à 0°C.

Ce procédé garantit la non désorption de l'eau dans la membrane pendant son refroidissement, évitant ainsi la dégradation des électrodes. Il limite les dépenses énergétiques pendant la phase d'assèchement P1 et permet d'obtenir une performance maximale de la pile en l'asséchant de manière optimale. L'invention supprime le risque de dégradations induites par un assèchement trop fort de la pile et elle est applicable quelle que soit la méthode d'assèchement utilisée et quelle que soit la température choisie de la pile pendant la phase d'assèchement.

Le procédé ci-dessus peut s'appliquer à des piles comportant des assemblages membrane/électrodes avec tout type de membrane à condition que la courbe d'évolution de la charge en eau en fonction de la température ainsi que la relation λ=f(HR,T) soient connues.

## Revendications

1.  Procédé de stockage d'une pile à combustible comportant au moins une cellule élémentaire (1) munie d'un assemblage membrane/électrodes (2) dans lequel une membrane est située entre une anode (4) et une cathode (5), procédé **caractérisé en ce que**, après une première phase d'étalonnage d'une membrane de référence, par résonance magnétique nucléaire, pour obtenir une courbe d'évolution de la charge en eau maximale ($\lambda_{max}(T)$) de la membrane en fonction de la température de la membrane, et une deuxième phase d'étalonnage d'une pile étalon, pour obtenir une relation entre la résistance électrique de la pile étalon, la charge en eau ($\lambda$) de sa membrane et sa température (T), le procédé comporte, à chaque phase de stockage de la pile à combustible à utiliser pour une température d'assèchement (Ta) donnée, les étapes successives suivantes :

    - la détermination d'une température de stockage (Ts),
    - la détermination à partir de ladite courbe d'évolution, d'une charge en eau de stockage ($\lambda$s) correspondant à la température de stockage (Ts),
    - la détermination, à partir de ladite relation, d'une valeur de résistance d'assèchement Ra($\lambda$s,Ta) de la pile à combustible à stocker correspondant à la température d'assèchement et à la charge en eau de stockage,
    - l'assèchement de la pile à combustible à la température d'assèchement (P1) jusqu'à ce que la résistance électrique aux bornes de la pile à combustible à stocker soit égale à ladite valeur de la résistance d'assèchement,
    - le refroidissement de la pile à combustible jusqu'à la température de stockage (P2),
    - le stockage de la pile à combustible à la température de stockage (Ts).

2.  Procédé selon la revendication 1, **caractérisé en ce que** la deuxième phase d'étalonnage comporte des mesures de la résistance électrique de la pile étalon pour une pluralité de valeurs de la charge en eau ($\lambda$) et de températures d'étalonnage (Te) différentes, chaque mesure de la résistance comportant les étapes successives suivantes :

    - la détermination, à partir de la courbe d'évolution, de la charge en eau ($\lambda$) à atteindre,
    - l'injection d'au moins un gaz neutre humidifié à l'anode (4) et/ou la cathode (5),
    - la mise à la température d'étalonnage (Te) de la pile étalon,
    - le maintien de l'injection du gaz neutre jusqu'à une stabilisation de la résistance électrique de la pile étalon et jusqu'à l'obtention d'une tension nulle en circuit ouvert,
    - le maintien de l'injection du gaz neutre à ladite résistance stabilisée pendant une période prédéterminée, l'arrêt de l'injection du gaz neutre et l'enregistrement de la résistance de la pile étalon correspondant à ladite charge en eau et à la température étalon (Te) correspondante.

3.  Procédé selon la revendication 2, **caractérisé en ce que** l'humidité relative du gaz neutre humidifié est déterminée à partir de la température d'étalonnage (Te) et de la charge en eau correspondante.

4.  Procédé selon l'une des revendications 2 et 3, **caractérisé en ce que** la température d'étalonnage (Te) est comprise entre 20°C et 90°C.

5.  Procédé selon l'une quelconque des revendications 1 à 4, **caractérisé en ce que** la membrane (3) de la pile à combustible est une membrane Nafion®.

**6.** Procédé selon l'une quelconque des revendications 2 à 5, **caractérisé en ce que** le gaz neutre utilisé pendant la deuxième phase d'étalonnage est de l'azote.

**7.** Procédé selon l'une quelconque des revendications 2 à 4 ou 6, **caractérisé en ce que** le gaz neutre humidifé circule à une vitesse supérieure à 5m/s et une pression proche de la pression atmosphérique dans au moins un canal (7a, 7b) situé dans une plaque distributrice (6a,6b) et relié à la cathode ou à l'anode.

**Claims**

**1.** Method for storing a fuel cell comprising at least one cell element (1) provided with a membrane/electrodes assembly (2) wherein a membrane is situated between an anode (4) and a cathode (5), method **characterized in that**, after a first calibration phase of a reference membrane by nuclear magnetic resonance to obtain a progression curve of the maximum water load ($\lambda_{max}$(T)) of the membrane as function of the membrane temperature, and a second calibration phase of a standard reference cell to obtain a relationship between the electrical resistance of the standard reference cell, the water load ($\lambda$) of its membrane and its temperature (T), the method comprises the following successive steps in each storage phase of the fuel cell to be used for a given drying temperature (Ta):

- determination of a storage temperature (Ts),
- determination of a storage water load ($\lambda$s) corresponding to the storage temperature (Ts) from said progression curve,
- determination of a drying resistance value Ra($\lambda$s,Ta) of the fuel cell to be stored corresponding to the drying temperature and to the storage water load from said relationship,
- drying the fuel cell at the drying temperature (P1) until the electrical resistance at the terminals of the fuel cell to be stored is equal to said drying resistance value,
- cooling the fuel cell down to the storage temperature (P2),
- storing the fuel cell at the storage temperature (Ts).

**2.** Method according to claim 1, **characterized in that** the second phase calibration comprises measurements of the electrical resistance of the standard reference cell for a plurality of different water load values ($\lambda$) and calibration temperatures (Te), each resistance measurement comprising the following successive steps:

- determination of the water load ($\lambda$) to be attained from the progression curve,
- injecting at least one humidified neutral gas on the anode (4) and/or cathode (5),
- bringing the standard reference cell to the calibration temperature (Te),
- maintaining injection of the neutral gas until stabilization of the electrical resistance of the standard reference cell is achieved and until a zero voltage is obtained in open circuit,
- maintaining injection of the neutral gas at said stabilized resistance for a predefined period, stopping injection of the neutral gas and recording the resistance of the standard reference cell corresponding to said water load and to the corresponding calibration temperature (Te).

**3.** Method according to claim 2, **characterized in that** the relative humidity of the humidified neutral gas is determined from the calibration temperature (Te) and from the corresponding water load.

**4.** Method according to one of claims 2 and 3, **characterized in that** the calibration temperature (Te) is comprised between 20°C and 90°C.

**5.** Method according to any one of claims 1 to 4, **characterized in that** the membrane (3) of the fuel cell is a Nafion® membrane.

**6.** Method according to any one of claims 2 to 5, **characterized in that** the neutral gas used during the second calibration phase is nitrogen.

**7.** Method according to any one of claims 2 to 4 or 6, **characterized in that** the humidified neutral gas flows at a speed of more than 5m/s and at a pressure close to atmospheric pressure in at least one channel (7a,7b) situated in a distributing plate (6a,6b) and connected to the cathode or the anode.

**Patentansprüche**

1. Verfahren zur Lagerung einer Brennstoffzelle, die wenigstens eine Elementarzelle (1) umfasst, welche mit einer Membran/Elektroden-Anordnung (2) ausgestattet ist, bei der eine Membran zwischen einer Anode (4) und einer Kathode (5) angeordnet ist, Verfahren, welches **dadurch gekennzeichnet ist, dass** - nach einer ersten Phase zur Eichung einer Referenzmembran mittels kernmagnetischer Resonanz für den Erhalt einer Verlaufskurve der maximalen Wasserfüllung ($\lambda_{max}(T)$) der Membran in Abhängigkeit der Temperatur der Membran und einer zweiten Phase zur Eichung eines Normalelements für den Erhalt einer Beziehung zwischen dem elektrischen Widerstand des Normalelements, der Wasserfüllung ($\lambda$) seiner Membran und ihrer Temperatur (T) - das Verfahren bei jeder Phase der Lagerung der zu verwendenden Brennstoffzelle für eine vorgegebene Entwässerungstemperatur (Ta) die folgenden aufeinanderfolgenden Schritte umfasst:

   - das Bestimmen einer Lagerungstemperatur (Ts),
   - das Bestimmen einer der Lagerungstemperatur (Ts) entsprechenden Lagerungswasserfüllung ($\lambda$s) anhand der Verlaufskurve,
   - das Bestimmen eines der Entwässerungstemperatur und der Lagerungswasserfüllung entsprechenden Entwässerungswiderstandswertes Ra($\lambda$s,Ta) der zu lagernden Brennstoffzelle anhand der Beziehung,
   - das Entwässern der Brennstoffzelle bei der Entwässerungstemperatur (P1) bis der elektrische Widerstand an den Anschlüssen der zu lagernden Brennstoffzelle gleich dem Wert des Entwässerungswiderstandes ist,
   - das Abkühlen der Brennstoffzelle bis auf die Lagerungstemperatur (P2),
   - das Lagern der Brennstoffzelle bei der Lagerungstemperatur (Ts).

2. Verfahren nach Anspruch 1, **dadurch gekennzeichnet, dass** die zweite Eichphase Messungen des elektrischen Widerstandes des Normalelements für eine Vielzahl von Werten der Wasserfüllung ($\lambda$) und von unterschiedlichen Eichtemperaturen (Te) umfasst, wobei jede Messung des Widerstandes die folgenden aufeinanderfolgenden Schritte umfasst:

   - das Bestimmen der zu erreichenden Wasserfüllung ($\lambda$) anhand der Verlaufskurve,
   - das Einleiten wenigstens eines befeuchteten Neutralgases an der Anode (4) und/oder der Kathode (5),
   - das Erwärmen des Normalelements auf die Eichtemperatur (Te),
   - das Aufrechterhalten des Einleitens des Neutralgases bis zu einer Stabilisierung des elektrischen Widerstandes des Normalelements und bis zum Erhalt einer Nullspannung im offenen Kreis,
   - das Aufrechterhalten des Einleitens des Neutralgases bei dem stabilisierten Widerstand für einen vorbestimmten Zeitraum, das Einstellen des Einleitens des Neutralgases und das Aufzeichnen des der Wasserfüllung und der entsprechenden Eichtemperatur (Te) entsprechenden Widerstandes des Normalelements.

3. Verfahren nach Anspruch 2, **dadurch gekennzeichnet, dass** die relative Feuchtigkeit des befeuchteten Neutralgases anhand der Eichtemperatur (Te) und der entsprechenden Wasserfüllung bestimmt wird.

4. Verfahren nach einem der Ansprüche 2 und 3, **dadurch gekennzeichnet, dass** die Eichtemperatur (Te) im Bereich zwischen 20 °C und 90 °C liegt.

5. Verfahren nach einem der Ansprüche 1 bis 4, **dadurch gekennzeichnet, dass** die Membran (3) der Brennstoffzelle eine Nafion®-Membran ist.

6. Verfahren nach einem der Ansprüche 2 bis 5, **dadurch gekennzeichnet, dass** das Neutralgas, das während der zweiten Eichphase verwendet wird, Stickstoff ist.

7. Verfahren nach einem der Ansprüche 2 bis 4 oder 6, **dadurch gekennzeichnet, dass** das befeuchtete Neutralgas mit einer Geschwindigkeit von mehr als 5 m/s und einem Druck nahe dem atmosphärischen Druck in wenigstens einem Kanal (7a, 7b), der in einer Verteilerplatte (6a, 6b) gelegen und mit der Kathode oder der Anode verbunden ist, zirkuliert.

Figure 1 (Art antérieur)

Figure 2

Figure 3

Figure 4

## RÉFÉRENCES CITÉES DANS LA DESCRIPTION

**Littérature non-brevet citée dans la description**

- **PINERI et al.** Water sorption-desorption in Nafion® membranes at low temperature, probed by micro X-Ray diffraction. *Journal of Power Sources,* 2007, vol. 172, 587-596

- **TAJIRI et al.** Isothermal Cold Start of Polymer Electolyte Fuel Cells. *Journal of The Electrochemical Society,* 2007, vol. 154, B147-B152
- **WEBER ; NEWMAN.** Transport in polymer-Electrolyte Membranes. *Journal of Electrochemical Society,* 2004, vol. 151 (2), A311-A326